# FASCICULE DE BREVET EUROPEEN

(11) **EP 2 913 737 B1**
(45) Date de publication et mention de la délivrance du brevet: **29.07.2020**
(21) Numéro de dépôt: 15150535.1
(22) Date de dépôt: 08.01.2015
(51) Int. Cl.: G05G 9/047, A63F 13/24

(54) **Bouton de commande pour manette de jeu et manette de jeu munie d'un tel bouton**
Steuerknopf für Joystick, und mit einem solchen Knopf ausgestatteter Joystick
Control button for joystick and joystick provided with such a button

(30) Priorité: 09.01.2014 FR 1450152
(43) Date de publication de la demande: 02.09.2015
(73) Titulaire: PLAYRAPID, 13210 Saint-Rémy-de-Provence (FR)
(72) Inventeur: Rubio, Damien, 13150 Tarascon (FR)
(74) Mandataire: IPAZ

(56) Documents cités:
- WO-A1-98/33568
- WO-A1-2010/018279
- GB-A- 2 335 024
- US-A- 5 883 690
- US-B1- 6 710 766
- US-B1- 7 993 203

## Description

La présente invention concerne un bouton de commande pour manette de jeu. Elle concerne également une manette de jeu munie d'un tel bouton de commande.

Le domaine de l'invention est le domaine des dispositifs d'entrée de commande pour une console de jeu ou un ordinateur, tel qu'une manette.

### Etat de la technique

La plupart des jeux électroniques/informatiques sont commandés par des dispositifs d'entrée de commande, tel qu'une manette de jeu, chargé de transmettre les actions d'un joueur vers la console de jeu ou l'ordinateur exécutant le jeu. Pour ce faire, la manette de jeu comporte plusieurs éléments capteurs/senseurs actionnés par des boutons de commande. La plupart des manettes comportent des boutons permettant d'entrer des commandes directionnelles, tels que des pavés directionnels ou des joysticks.

Les boutons de commandes, et en particulier les joysticks, constituent les parties sensibles d'une manette de jeu et sont, en général, les parties d'une manette qui sont cassées ou abimées en premier.

De plus, certains joysticks comportent en leur partie supérieure un revêtement réalisé en un matériau présentant des caractéristiques d'adhérence et de confort spécifiques visant à rendre plus agréable l'interaction entre le bouton de commande et les doigts d'un joueur. Or, au fur et à mesure de l'utilisation de la manette le revêtement se dégrade au détriment du confort du joueur.

Les solutions actuelles pour réparer un bouton cassé ou abimé, ou encore dont le revêtement est dégradé, consistent en un remplacement du bouton. Pour ce faire, il est nécessaire de démonter le châssis de la manette de jeu car il n'est pas possible de désolidariser un bouton de commande de son élément senseur sans avoir au préalable enlevé le châssis de la manette. Une telle opération est consommateur en temps, nécessite un outillage spécifique, et reste une opération complexe présentant des risques de dégradation de la manette pour une personne non formée.

De plus, même lorsque seule une partie du bouton de commande est abimée, par exemple le revêtement de la partie supérieure du bouton, les solutions actuelles prévoient le remplacement de la totalité du bouton. Ce qui est couteux et génère des déchets inutiles.

Enfin, ces inconvénients sont également présents lorsqu'un utilisateur souhaite personnaliser sa manette de jeu en choisissant des boutons de commande selon ses préférences.

US 5 883 690 A divulgue un joystick comprenant un élément actionnable manuellement et une base en contact avec les boutons d'un clavier.

Un but de la présente invention est de remédier aux inconvénients précités.

Un autre but de l'invention est de proposer un bouton de commande dont la maintenance est moins couteuse et moins consommatrice en temps.

Un autre but de l'invention est de proposer un bouton de commande personnalisable de manière simple, rapide et accessible à toute personne.

Enfin un autre but de l'invention est de proposer un bouton de commande dont la maintenance ne présente aucun risque de dégradation pour la manette.

### Exposé de l'invention

L'invention est définie par les caractéristiques de la revendication 1 et propose d'atteindre au moins l'un des buts précités par un bouton de commande pour manette de jeu, et plus généralement pour un dispositif d'entrée de commande pour un jeu électronique/informatique, qui est formé par exactement deux éléments :
- un premier élément, dit élément de base, prévu pour être fixé dans/sur ladite manette et interagir avec un élément capteur de ladite manette, et
- un deuxième élément, dit élément actionneur, prévu pour être fixé sur ledit élément de base de manière amovible ou démontable.

Ainsi, l'invention prévoit de réaliser un bouton de commande en exactement deux éléments : un élément de base disposé dans la manette, en partie sous le châssis de la manette et restant fixé à la manette et un élément actionneur fixé à l'élément de base de manière amovible/démontable, sans avoir à démonter le châssis de la manette.

Par conséquent, le bouton de commande selon l'invention permet une maintenance moins couteuse car il permet de changer uniquement l'élément abimé/dégradé du bouton sans avoir à remplacer le bouton dans son intégralité.

De plus, la partie d'un bouton qui s'abime le plus est la partie supérieure du bouton qui est en contact avec le doigt d'un utilisateur. L'invention permet de changer cette partie supérieure, constituée par l'élément actionneur, sans avoir à démonter l'élément de base et par conséquent sans avoir à démonter le châssis de la manette. Ainsi, le bouton selon l'invention permet une maintenance plus rapide, plus simple, réalisable par toute personne et présentant moins de risque de dégradation pour la manette.

Enfin, le bouton de commande selon l'invention permet à un utilisateur de le personnaliser de manière simple, rapide et sans risque pour la manette et de choisir un élément actionneur selon ses préférences techniques et/ou purement esthétiques.

Suivant une version particulièrement préférée de l'invention, l'élément actionneur est fixé à l'élément de base de manière amovible, évitant ainsi l'utilisation d'un outil pour fixer ou enlever l'élément actionneur.

Avantageusement, l'élément de base et/ou l'élément actionneur peut comporter au moins une forme, dite de fixation, réalisée sur/autour/dans ledit élément et prévue pour fixer l'élément actionneur à l'élément de base sans élément de fixation indépendant desdits éléments de base et actionneur.

Ainsi, le bouton de commande évite la manipulation d'un élément de fixation en plus de l'élément de base et de l'élément actionneur. Il est par conséquent plus facile et plus rapide de fixer ou d'enlever l'élément actionneur. De plus, le coût du bouton de commande est diminué.

Selon un exemple de réalisation particulier, chacun des éléments de base et actionneur peut comporter une forme de fixation réalisée sur ledit élément et prévue pour fixer l'élément actionneur sur l'élément de base.

Par exemple, l'élément actionneur peut comporter une forme de fixation mâle prévue pour coopérer avec une forme de fixation femelle prévue sur l'élément de base.

Préférentiellement, l'élément actionneur peut être prévu pour être fixé à l'élément de base par translation suivant un axe perpendiculaire audit élément de base, et plus particulièrement un axe perpendiculaire au plan dans lequel l'élément de base peut être bougé pour entrer une commande.

Dans cette version, le bouton de commande permet de fixer ou d'enlever l'élément actionneur en évitant d'appliquer sur l'élément de base des efforts dans la ou les directions dans lesquelles l'élément de base peut être positionné pour entrer une commande. Ainsi, on évite de dégrader l'élément de base lorsque l'élément actionneur est fixé ou enlevé.

De plus, dans cette version, il est possible de remplacer l'élément actionneur lorsque l'utilisateur est en train de jouer, sans entrer de commandes parasites ou non désirées.

Avantageusement, au moins un des éléments actionneur ou de base peut comporter un moyen prévu pour empêcher la rotation de l'élément actionneur par rapport à l'élément de base autour d'un axe d'assemblage desdits éléments entre eux.

Un tel élément permet d'éviter que l'élément actionneur bouge par rapport à l'élément de base lorsque le bouton de commande est manipulé par l'utilisateur.

Alternativement, l'élément actionneur est prévu pour être fixé sur l'élément de base par rotation autour d'un axe perpendiculaire audit élément de base. Cette alternative permet de régler la hauteur totale du bouton de commande. Cependant, dans cette alternative il existe des risques de dégradation du bouton de commande en appliquant des efforts de rotation sur l'élément de base.

Avantageusement, au moins un des éléments actionneur ou de base comporte un moyen, dit de verrouillage, prévu pour bloquer l'élément actionneur sur l'élément de base lors de l'assemblage desdits éléments entre eux. Un tel élément de verrouillage permet d'éviter que l'élément actionneur se détache de l'élément de base de manière intempestive lorsque le bouton de commande est manipulé par l'utilisateur.

Un tel élément de verrouillage peut être réalisé sur l'élément de base et/ou sur l'élément actionneur, d'un seul tenant.

L'élément de verrouillage peut être mis en œuvre ou actionné en appliquant un effort supplémentaire, par exemple appliqué dans la direction d'assemblage. Dans ce cas, le désassemblage de l'élément actionneur de l'élément de base nécessitera également un effort supplémentaire dans la même direction et dans le sens opposé.

L'élément de verrouillage peut être réalisé par une forme en saillie, prévue sur un des éléments actionneur ou de base, venant se loger dans un évidement réalisé sur l'autre des éléments actionneur ou de base, suite à l'application d'un effort supérieur à celui réalisé lors de l'assemblage des éléments.

Le bouton selon l'invention peut se présenter par exemple sous la forme d'un élément positionnable suivant au moins deux directions, tel qu'un pavé directionnel ou un joystick, pour réaliser une commande directionnelle.

Selon un exemple de réalisation préféré, mais nullement limitatif, du bouton de commande :
- l'élément de base peut comporter un évidement sensiblement en forme de « C » ;
- l'élément actionneur peut comporter une partie mâle en forme de « C » de dimensions complémentaires à celles dudit évidement, prévue pour coopérer avec ledit évidement pour réaliser la fixation dudit élément actionneur sur ledit élément de base et empêcher la rotation dudit élément actionneur par rapport audit élément de base autour de l'axe d'assemblage.

De plus, l'élément actionneur peut comporter un évidement, réalisé au fond de la partie mâle et prévu pour recevoir une forme en saillie, réalisée à l'extrémité de la partie centrale de l'évidement en forme de « C » pour réaliser le verrouillage de l'élément actionneur avec l'élément de base. Pour ce faire, l'évidement réalisé au fond de la partie mâle présente une section de dimensions inférieures à la section de la forme en saillie de sorte que la forme en saillie est logée serrée dans ledit évidement.

Selon un autre aspect de l'invention, il est proposé une manette de jeu comprenant au moins un bouton de commande selon l'invention.

Avantageusement, la manette peut comprendre un bouton directionnel, de type pavé directionnel ou joystick, selon l'invention.

D'autres avantages et caractéristiques apparaîtront à l'examen de la description détaillée de modes de réalisation nullement limitatifs, et des dessins annexés sur lesquels :
- les FIGURES 1 et 2 sont des représentations schématiques d'un premier exemple de réalisation d'un bouton de commande selon l'invention ; et
- les FIGURES 3 et 4 sont des représentations schématiques de deux exemples de réalisation préférés d'un bouton de commande selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieur.

En particulier toutes les variantes et modes de réalisation décrits sont combinables entre eux si rien ne s'oppose à cette combinaison sur le plan technique.

Sur les figures et dans la suite de la description, les éléments communs à plusieurs figures conservent la même référence.

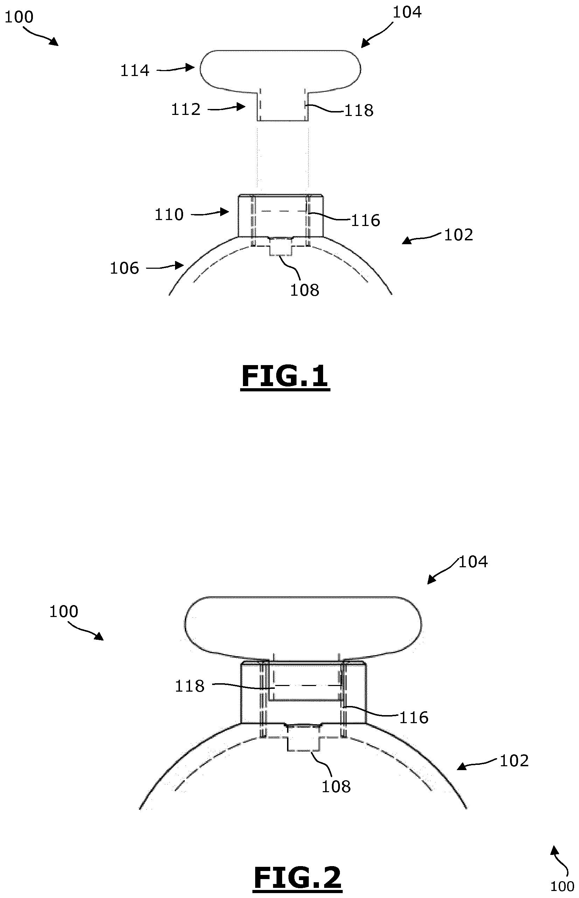

La FIGURE 1 est une représentation schématique d'un premier exemple d'un bouton selon l'invention dans laquelle les deux éléments formant le bouton ne sont pas fixés.

La FIGURE 2 est une représentation schématique du bouton de la FIGURE 1 dans laquelle les deux éléments formant le bouton sont fixés entre eux de manière démontable.

Le bouton 100 représenté sur les FIGURES 1 et 2 comporte un élément de base 102 et un élément actionneur 104.

L'élément de base 102 est prévu pour être fixé dans une manette de jeu, en partie sous le châssis de la manette de jeu de sorte qu'il ne peut être démonté de la manette sans démonter le châssis de la manette. Il comporte une partie inférieure 106 prévue pour être fixée à un élément senseur qui vient s'engager dans un évidement 108 réalisé en sa partie inférieure 106 et une partie supérieure 110 prévue pour y fixer de manière amovible l'élément actionneur 104.

L'élément actionneur 104 comporte une partie inférieure 112 prévue pour le fixer sur l'élément de base 102 de manière amovible et une partie supérieure 114, prévue pour entrer en contact avec un doigt de l'utilisateur, permettant à un utilisateur déplacer le bouton 100 pour entrer des commandes directionnelles.

L'élément de base 102 comporte en sa partie supérieure 108 un taraudage 116 prévu pour coopérer avec un filetage 118 prévu sur la partie inférieure 112 de l'élément actionneur pour fixer, de manière amovible, l'élément actionneur 104 sur l'élément de base 102. La fixation de l'élément actionneur 104 à l'élément de base 102 se fait donc par rotation permettant au filetage 118 de s'engager avec le taraudage 116.

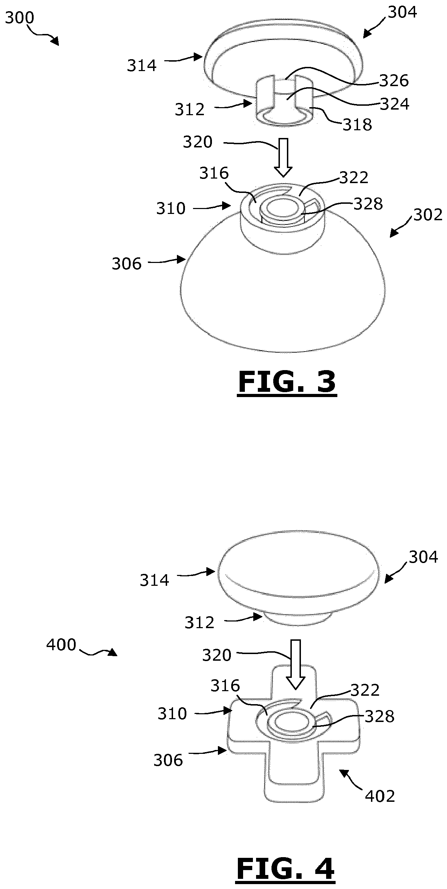

La FIGURE 3 est une représentation schématique d'un exemple préféré de réalisation dans le cas où le bouton est un joystick permettant d'entrer des commandes directionnelles.

Le bouton 300 représenté sur la FIGURE 3 comporte un élément de base 302 et un élément actionneur 304.

L'élément de base 302 est prévu pour être fixé dans une manette de jeu, et en particulier en partie sous le châssis de la manette de jeu de sorte qu'il ne peut être démonté de la manette sans démonter le châssis de la manette. Il comporte une partie inférieure 306 prévue pour être fixée à un élément senseur qui vient s'engager dans un évidement (non représenté) réalisé en sa partie inférieure 306 et une partie supérieure 310 prévue pour y fixer de manière amovible l'élément actionneur 304.

L'élément actionneur 304 comporte une partie inférieure 312 prévue pour le fixer sur l'élément de base 302 de manière amovible et une partie supérieure 314, prévue pour entrer en contact avec un doigt de l'utilisateur, permettant à un utilisateur déplacer le bouton 300 pour entrer des commandes directionnelles.

L'élément de base 302 comporte en sa partie supérieure 310 un évidement 316 en forme de « C » formant une forme de fixation femelle et prévu pour accueillir une forme de fixation mâle 318 en forme de « C » formée sur le partie inférieure 312 de l'élément actionneur 304. L'élément actionneur 304 est assemblé avec l'élément de base 302 en glissant la forme de fixation mâle 318 dans l'évidement 316 suivant une direction sensiblement rectiligne symbolisée par la flèche 320.

De plus, la partie supérieure 310 de l'élément de base 302 comporte entre les branches de l'évidement en forme de « C » de la matière constituant une butée 322, venant se positionner dans l'espace 324 se trouvant entre les branches de la forme mâle 318 en forme de « C » formée sur la partie inférieure 312 de l'élément actionneur 304 de sorte à éviter la rotation de l'élément actionneur 304 par rapport à l'élément de base 302 autour de la direction 320.

En outre, l'élément actionneur 304 comporte un évidement 326 prévu au fond de la forme de fixation mâle 318 et prévu pour recevoir le sommet 328 de la partie centrale de l'évidement en forme de « C ». Ce sommet 328 présente un diamètre sensiblement supérieur au diamètre de l'évidement 326 de sorte qu'il est inséré dans l'évidement 326 en appliquant un effort supérieur à celui nécessaire à l'assemblage des éléments actionneur 304 et de base 302. Ainsi, l'évidement 326 et le sommet 328 forment un moyen de verrouillage de l'élément actionneur 304 avec l'élément de base 302 évitant un désassemblage intempestif de ces éléments.

La FIGURE 4 est une représentation schématique de l'exemple préféré de réalisation décrit en référence à la FIGURE 3 dans le cas où le bouton est un pavé directionnel.

Le bouton 400 représenté sur la FIGURE 4 comporte tous les éléments du bouton de la FIGURE 3 à ceci près qu'il comporte un élément de base 402 qui est un pavé directionnel et l'élément actionneur 304 vient se fixer sur l'élément de base 402 sensiblement sur une zone centrale du pavé directionnel 402.

Bien entendu l'invention n'est pas limitée aux exemples qui viennent d'être décrits.

## Revendications

1. Bouton de commande (100;300) pour manette de jeu, se présentant sous la forme d'un joystick et formé par exactement deux éléments :
- un premier élément (102;302), dit élément de base, prévu pour être fixé en partie sous un châssis de ladite manette et comportant une partie inférieure (106) comprenant un unique évidement (108) et une partie supérieure (110) prévue pour y fixer de manière amovible un élément actionneur (104), et
- un deuxième élément (104;304), dit élément actionneur, comportant une partie inférieure (112) prévue pour être fixée sur ledit élément de base (102;302) de manière amovible ou démontable et une partie supérieure (114) prévue pour entrer en contact avec un doigt de l'utilisateur,
**caractérisé en ce que** l'unique évidement (108) est prévu pour recevoir un unique élément senseur.

2. Bouton (100;300) selon la revendication 1, **caractérisé en ce que** l'élément de base (102;302) et/ou l'élément actionneur (104;304) comporte au moins une forme (116,118;316;318), dite de fixation, réalisée sur/autour/dans ledit élément et prévue pour fixer l'élément actionneur (104;304) à l'élément de base (102;302) sans élément de fixation indépendant desdits éléments de base et actionneur.

3. Bouton (100;300) selon l'une quelconque des revendications précédentes, **caractérisé en ce que** chacun des éléments de base (102;302) et actionneur (104;304) comporte une forme (116,118;316; 318), dite de fixation, réalisée sur ledit élément et prévue pour fixer l'élément actionneur (104;304) sur l'élément de base (102;302).

4. Bouton (100;300) selon l'une quelconque des revendications précédentes, **caractérisé en ce que** l'élément actionneur (104;304) comporte une forme de fixation mâle (118;318) prévue pour coopérer avec une forme de fixation femelle (116;316) prévue sur l'élément de base (102;302).

5. Bouton (300) selon l'une quelconque des revendications précédentes, **caractérisé en ce que** l'élément actionneur (304) est prévu pour être fixé à l'élément de base (302) par translation suivant un axe (320) perpendiculaire audit élément de base (302).

6. Bouton (300) selon l'une quelconque des revendications précédentes, **caractérisé en ce qu'**au moins un des éléments actionneur (304) ou de base (302) comporte un moyen (322;324) prévu pour empêcher la rotation de l'élément actionneur (304) par rapport à l'élément de base (302) autour d'un axe (320) d'assemblage desdits éléments entre eux.

7. Bouton (300) selon l'une quelconque des revendications précédentes, **caractérisé en ce qu'**au moins un des éléments actionneur (304) ou de base (302) comporte un moyen (326;328), dit de verrouillage, prévu pour bloquer l'élément actionneur (304) sur l'élément de base (302) lors de l'assemblage desdits éléments entre eux.

8. Bouton (300) selon la revendication 1, **caractérisé en ce que** :
- l'élément de base (302) comporte un évidement (316) sensiblement en forme de « C » ;
- l'élément actionneur (304) comporte une partie mâle (308) en forme de « C » de dimensions complémentaires à celles dudit évidement (316), prévue pour coopérer avec ledit évidement (316) pour réaliser la fixation dudit élément actionneur (304) avec ledit élément de base (302) et empêcher la rotation dudit élément actionneur (304) par rapport audit élément de base (302).

9. Manette de jeu comprenant au moins un bouton de commande (100;300) selon l'une quelconque des revendications précédentes.

## Patentansprüche

1. Steuerknopf (100; 300) für Spielcontroller in der Form eines Joysticks und durch genau zwei Bauteile gebildet:
- ein erstes, sogenanntes Grundbauteil (102; 302), das zur teilweisen Befestigung unter einem Rahmen des Spielcontrollers vorgesehen ist und einen unteren Teil (106), welcher eine alleinige Aussparung umfasst, und einen oberen Teil (110) umfasst, welcher zur lösbaren Befestigung eines Betätigungsbauteils (104) daran vorgesehen ist, und
- ein zweites, sogenanntes Betätigungsbauteil (104; 304), das einen unteren Teil (112), welcher zur lösbaren oder abtrennbaren Befestigung an dem Grundbauteil (102; 302) vorgesehen ist, und einen oberen Teil (114) umfasst, welcher zur Kontaktierung mit einem Finger des Benutzers vorgesehen ist, **dadurch gekennzeichnet, dass** die alleinige Aussparung (108) zur Aufnahme eines alleinigen Sensorelements vorgesehen ist.

2. Knopf (100; 300) nach Anspruch 1, **dadurch gekennzeichnet, dass** das Grundbauteil (102; 302) und/oder das Betätigungsbauteil (104; 304) mindestens eine sogenannte Befestigungsform (116, 118; 316; 318) aufweist, welche auf/um/in dem Bauteil ausgebildet und zur Befestigung des Betätigungsbauteils (104; 304) an dem Grundbauteil (102; 302) ohne von den Grund- und Betätigungsbauteilen unabhängiges Befestigungselement vorgesehen ist.

3. Knopf (100; 300) nach einem der vorhergehenden Ansprüche, **dadurch gekennzeichnet, dass** jedes der Grund- (102; 302) und Betätigungsbauteile (104; 304) eine sogenannte Befestigungsform (116, 118; 316; 318) aufweist, welche auf dem Bauteil gebildet und zur Befestigung des Betätigungsbauteils (104; 304) an dem Grundbauteil (102; 302) vorgesehen ist.

4. Knopf (100; 300) nach einem der vorhergehenden Ansprüche, **dadurch gekennzeichnet, dass** das Betätigungsbauteil (104; 304) eine Steckerbefestigungsform (118; 318) aufweist, welche zur Mitwirkung mit einer Buchsenbefestigungsform (116; 316) vorgesehen ist, welche auf dem Grundbauteil (102; 302) vorgesehen ist.

5. Knopf (300) nach einem der vorhergehenden Ansprüche, **dadurch gekennzeichnet, dass** das Betätigungsbauteil (304) zur Befestigung an dem Grundbauteil (302) durch Verschiebung in einer Achse (320) senkrecht zu dem Grundbauteil (302) vorgesehen ist.

6. Knopf (300) nach einem der vorhergehenden Ansprüche, **dadurch gekennzeichnet, dass** mindestens eins der Betätigungs- (304) oder Grundbauteile (302) eine Einrichtung (322; 324) aufweist, welche dazu vorgesehen ist, die Drehung des Betätigungsbauteils (304) gegenüber dem Grundbauteil (302) um eine Montageachse (320) der Bauteile miteinander zu verhindern.

7. Knopf (300) nach einem der vorhergehenden Ansprüche, **dadurch gekennzeichnet, dass** wenigstens eins der Betätigungs- (304) oder Grundbauteile (302) eine so genannte Verriegelungseinrichtung (326; 328) aufweist, welche zur Arretierung des Betätigungsbauteils (304) auf dem Grundbauteil (302) beim Zusammenbau der Bauteile miteinander vorgesehen ist.

8. Knopf (300) nach Anspruch 1, **dadurch gekennzeichnet, dass**:
- das Grundbauteil (302) eine im Wesentlichen C-förmige Aussparung (316) aufweist;
- das Betätigungsbauteil (304) einen C-förmigen Steckerteil (308) mit den Abmessungen der Aussparung (316) ergänzenden Abmessungen aufweist, welcher zur Mitwirkung mit der Aussparung (316) vorgesehen ist, um die Befestigung des Betätigungsbauteils (304) mit dem Grundbauteil (302) auszubilden und um die Drehung des Betätigungsbauteils (304) gegenüber dem Grundbauteil (302) zu verhindern.

9. Spielcontroller, mindestens einen Steuerknopf (100; 300) nach einem der vorhergehenden Ansprüche umfassend.

## Claims

1. A command button (100;300) for a game pad, in the form of a joystick, and formed by precisely two elements:
- a first element (102;302), called base element, provided to be fixed partially under a frame of said pad and comprising a lower part comprising a single recess (108) and an upper part (110) provided to detachably fix an actuator element (104) thereto, and
- a second element (104;304), called actuator element, comprising a lower part (112) provided to be removably or detachably fixed on said base element (102;302) and an upper part (114) provided to come into contact with a finger of a user;
**characterized in that** the single recess (108) is provided to receive a single detector element.

2. The button (100;300;) according to claim 1, **characterized in that** the base element (102;302;) and/or the actuator element (104;304) comprises at least one shape (116,118;316;318), called fixing shape, produced on/around/in said element and provided for fixing the actuator element (104;304) to the base element (102;302;) without a fixing element that is independent of said base elements and actuator.

3. The button (100;300;) according to any one of the preceding claims, **characterized in that** each of the base (102;302;) and actuator (104; 304) elements comprises a shape (116,118;316;318), called fixing shape, produced on said element and provided for fixing the actuator element (104;304) to the base element (102;302).

4. The button (100;300;) according to any one of the preceding claims, **characterized in that** the actuator element (104;304) comprises a male fixing shape (118;318) provided to engage with a female fixing shape (116;316) provided on the base element (102;302).

5. The button (300) according to any one of the preceding claims, **characterized in that** the actuator element (304) is provided to be fixed to the base element (302) by translation along an axis (320) perpendicular to said base element (302).

6. The button (300) according to any one of the preceding claims, **characterized in that** at least one of the actuator (304) or base (302) elements comprises a means (322;324) provided to prevent the rotation of the actuator element (304) with respect to the base element (302) about a axis (320) of assembly of said elements.

7. The button (300) according to any one of the preceding claims, **characterized in that** at least one of the actuator (304) or base (302) elements comprises a means (326;328), called locking means, provided for locking the actuator element (304) on the base element (302) when said elements are assembled together.

8. The button (300) according to claim 1, **characterized in that**:
- the base element (302) comprises a substantially C-shaped recess (316);
- the actuator element (304) comprises a C-shaped male part (318) having dimensions that are complementary to those of said recess (316), provided to engage with said recess (316) in order to fix said actuator element (304) to said base element (302) and prevent the rotation of said actuator element (304) with respect to said base element (302).

9. A game pad comprising at least one command button (100;300;) according to any one of the preceding claims.
